# FASCICULE DE BREVET EUROPEEN

(11) **EP 3 221 193 B1**
(45) Date de publication et mention de la délivrance du brevet: **09.01.2019**
(21) Numéro de dépôt: 15801341.7
(22) Date de dépôt: 04.11.2015
(51) Int. Cl.: B60S 9/12, B60K 7/00, B60K 17/14, B62D 7/18, F16L 27/087, F16L 39/04, B60G 3/01, B60K 17/30

(54) **PROCEDE POUR ALIMENTER EN FLUIDE HYDRAULIQUE UN MOTEUR HYDRAULIQUE DE ROUE MOTRICE, SUSPENSION A VERIN S'Y RAPPORTANT ET VEHICULE AINSI EQUIPE**
VERFAHREN ZUR VERSORGUNG EINES HYDRAULIKMOTORS FÜR EIN ANTRIEBSRAD MIT HYDRAULIKFLÜSSIGKEIT, ZUGEHÖRIGES ZYLINDERARTIGES AUFHÄNGUNGSSYSTEM UND DAMIT AUSGESTATTETES FAHRZEUG
METHOD OF SUPPLYING A HYDRAULIC MOTOR FOR A DRIVE WHEEL WITH HYDRAULIC FLUID, ASSOCIATED CYLINDER-TYPE SUSPENSION SYSTEM AND VEHICLE EQUIPPED THEREWITH

(30) Priorité: 18.11.2014 FR 1461147
(43) Date de publication de la demande: 27.09.2017
(73) Titulaire: Albert, Laurent, Eugène, 51300 Frignicourt (FR)
(72) Inventeur: Albert, Laurent, Eugène, 51300 Frignicourt (FR)
(74) Mandataire: GIE Innovation Competence Group
(86) Numéro de dépôt international: PCT/EP2015/075753
(87) Numéro de publication internationale: WO 2016/078917

(56) Documents cités:
- EP-A1- 0 620 132
- WO-A1-93/13954
- DE-A1- 4 131 545
- DE-A1- 19 834 411
- FR-A1- 2 693 154

## Description

### Introduction

L'invention se rapporte à un procédé pour alimenter en fluide hydraulique un moteur hydraulique de roue motrice supportant un véhicule par l'intermédiaire d'une suspension à vérin. Il est également proposé une suspension à vérin mettant en oeuvre ce procédé, ainsi qu'un véhicule équipé d'une telle suspension.

### Art antérieur

L'invention appartient au domaine des alimentations de moteur hydraulique de roue motrice supportant un véhicule, au niveau du moteur hydraulique. Les véhicules concernés sont notamment des engins de chantier, des tracteurs agricoles ou autres machines agricoles automotrices, etc., pour lesquels il est difficile ou impossible de prévoir une transmission mécanique entre le moteur thermique et les roues. On rencontre cette situation notamment avec les véhicules devant avoir une grande garde au sol, incompatible avec la présence d'arbres moteurs rejoignant l'axe des roues motrices. Le document DE102010022313 décrit une suspension reliant de façon souple une roue à motorisation hydraulique, la suspension comprenant deux vérins parallèles entre eux. Le document DE 19834411 décrit une suspension à vérin agencée pour relier de façon souple une roue à motorisation hydraulique avec un châssis de véhicule comprenant un vérin de suspension, des moyens de canalisation pour relier la pompe hydraulique montée sur le châssis et le moteur hydraulique associé à la roue s'étendant longitudinalement à travers le vérin.

Dans le domaine précité, le moteur principal, généralement thermique, entraîne une pompe qui produit un fluide hydraulique (de l'huile) sous pression qui alimente le moteur hydraulique de chaque roue motrice. L'huile ayant travaillé dans le moteur hydraulique retourne sous faible pression à l'entrée de la pompe. L'alimentation du moteur hydraulique est assurée par des tubes souples, appelés « des flexibles », reliés au moteur. Les flexibles se déforment pour accepter le débattement d'une suspension de la roue ainsi que, dans le cas d'une roue directrice, le braquage de la roue. En outre, étant proches des roues et du sol, les flexibles sont exposés aux agressions mécaniques.

Le risque de rupture ou l'éclatement des flexibles ne peut être réduit que de manière incertaine par une maintenance préventive et un remplacement éventuellement prématuré. Le risque de rupture ou d'éclatement des flexibles est un handicap majeur en termes de fiabilité d'une machine ainsi équipée. De plus, la rupture ou l'éclatement d'un flexible est redoutée car elle s'accompagne d'une importante fuite d'huile qui pollue les sols, notamment agricoles, sur lesquels évoluent ces véhicules.

L'alimentation par flexibles implique de prévoir un emplacement spécifique derrière la roue pour disposer les conduits. Quelle que soit la position de la roue par rapport au châssis au cours de la progression du véhicule, les organes de suspension et de motorisation doivent ne pas interférer spatialement avec les conduits souples. Ceci est contraignant en termes de conception.

Ainsi, l'alimentation par flexibles implique une conception contrainte, un coût de fabrication, une maintenance particulière et un risque de pannes.

Un but de l'invention est de pallier tout ou partie des inconvénients de l'état de la technique, et/ou d'améliorer la souplesse et la simplicité de montage tout en conservant ou en améliorant la robustesse et le coût de la fabrication, de la maintenance et/ou du fonctionnement des moyens par lesquels un moteur hydraulique de roue motrice est alimenté en fluide hydraulique.

### Exposé de l'invention

On atteint au moins l'un des objectifs précités avec un procédé selon la revendication 1.

Les vérins sont d'un type parmi plusieurs possibles. Il peut par exemple s'agir de vérins renfermant un ressort hélicoïdal de suspension, fonctionnant en compression entre le plongeur et le fond du cylindre formé dans le corps du vérin. Il peut s'agir de vérins de suspension oléopneumatique ou pneumatique. Il peut encore s'agir de vérins amortisseurs fonctionnant en combinaison avec un ressort de suspension installé fonctionnellement entre le support de roue et le châssis, en parallèle avec le vérin.

Suivant l'invention, il n'y a plus besoin de tube souple et il n'y a donc plus de risques de rupture de tube souple. Le passage de fluide est réalisé à travers le vérin de la suspension à vérin. Cette caractéristique dispense de prévoir derrière la roue un emplacement spécifique pour la disposition les conduits.

Ainsi, le procédé selon l'invention résout les objectifs précités.

Selon l'invention, on fait passer le fluide hydraulique ayant traversé le moteur, par un canal de retour s'étendant longitudinalement à travers un deuxième vérin télescopique de la suspension à vérin, la suspension à vérin étant équipée de deux vérins parallèles.

Selon un deuxième aspect de l'invention, il est proposé une suspension à vérin selon la revendication 2.

De préférence, le plongeur de vérin est fixé au stator de roue.

Selon l'invention, l'au moins un canal comprend un canal d'alimentation du moteur hydraulique en fluide hydraulique sous pression et un canal de retour pour le fluide hydraulique refoulé par le moteur hydraulique et retournant à la pompe. Dans le cas de certains moteurs à deux sens de marche, le canal d'alimentation peut devenir canal de retour pour la marche arrière, et le canal de retour devient alors canal d'alimentation.

Selon l'invention, la suspension est à deux vérins parallèles, comportant chacun un canal précité, d'alimentation et de retour respectivement.

De préférence, les corps des deux vérins sont reliés rigidement l'un à l'autre.

Dans le cas d'une roue directrice, le ou les corps de vérin ont uniquement un degré de liberté en rotation par rapport au châssis, autour d'un axe de pivot de direction.

Dans le cas d'une roue directrice, l'angle de braquage de la suspension peut être de 90° vers l'intérieur et/ou l'extérieur du véhicule.

Les moyens de liaison de la suspension au châssis peuvent être disposés au dessus du ou des corps de vérin.

Dans le cas d'une roue non directrice, le ou les corps de vérin sont solidarisé(s) au châssis.

Avantageusement, le canal communique avec une chambre de compensation des variations de longueur du canal, consécutives aux variations de longueur du vérin.

De préférence, la chambre de compensation a une section égale à celle du canal dans une région dont la longueur varie avec la longueur du vérin, et la chambre de compensation a une longueur axiale qui subit des variations égales en valeur et opposées en signe à celles de la région du canal.

Selon une particularité, la chambre de compensation est définie entre deux parois d'extrémité de cette chambre, qui appartiennent l'une à un cylindre du vérin et l'autre à un plongeur du vérin, et qui s'éloignent l'une de l'autre lorsque le vérin se raccourcit.

Dans un mode de réalisation particulier, la chambre de compensation est annulaire et définie entre une paroi cylindrique intérieure formée sur le pourtour du plongeur et une paroi cylindrique extérieure formée à l'intérieur du cylindre de vérin, et le canal communique avec la chambre par un passage essentiellement radial à travers le plongeur.

Avantageusement, la communication entre le canal et la chambre de compensation comporte un rétrécissement qui contribue à l'amortissement de la suspension.

Dans un mode de réalisation avantageux, le canal est en partie défini dans un alésage d'un plongeur de vérin et en partie dans une canule axiale qui est fixée au corps du vérin dans un cylindre du vérin. La canule coulisse dans l'alésage du plongeur lors des débattements de la suspension. Une étanchéité est prévue autour de la canule dans l'alésage du plongeur.

De préférence, pour former le rétrécissement, le passage est en partie formé par l'interstice entre la canule et l'alésage.

Dans le cas d'une suspension pour une roue directrice, du côté du châssis, le canal est de préférence raccordé à une chambre qui est concentrique avec un pivot de direction.

Dans un mode de réalisation, il y a deux chambres, l'une pour l'alimentation en fluide hydraulique sous pression, l'autre pour le retour de fluide hydraulique, l'une centrale, l'autre annulaire autour de la chambre centrale.

De préférence, il y a en outre dans le pivot de direction une chambre de récupération de fuite placée pour intercepter les fuites hydrauliques dans le pivot de direction et/ou raccordée à un canal de récupération de fuites de fluide hydraulique.

Avantageusement, le médium de suspension situé dans la chambre de travail du vérin entre le plongeur et un fond du cylindre du vérin est non miscible avec le fluide hydraulique qui alimente le moteur hydraulique.

Avantageusement, le médium de suspension situé dans la chambre de travail entre le plongeur et le cylindre du vérin est non miscible avec le fluide hydraulique qui alimente le moteur hydraulique. On évite ainsi que le fluide hydraulique du moteur hydraulique se mélange à une huile se trouvant dans la chambre de travail du vérin. Typiquement, le médium se trouvant dans la chambre du vérin est un gaz.

De préférence, la suspension selon l'invention peut comprendre en outre un ressort fonctionnellement disposé entre un corps de vérin et le bâti du moteur hydraulique. Lorsque la suspension comporte deux corps de vérins, le ressort peut être fonctionnellement disposé entre les corps des vérins et le bâti du moteur hydraulique. Ce ressort peut être de type mécanique ou pneumatique.

Avantageusement, la suspension selon l'invention peut comprendre en outre un ensemble comportant un ressort et un vérin de correction d'assiette montés en série, l'ensemble étant fonctionnellement disposé entre les corps des vérins et le bâti du moteur hydraulique. Ce ressort peut être de type mécanique ou pneumatique. Le vérin de correction d'assiette peut être de type hydraulique.

Avantageusement, le véhicule peut être équipé de moyens de réglage du volume de fluide du vérin de correction d'assiette et de la pressurisation des vérins de suspensions.

Avantageusement, une loi de commande, par exemple dédiée à contrôler l'assiette du véhicule ou la raideur des suspensions, détermine le volume de fluide du vérin de correction d'assiette et la pressurisation des vérins de suspensions.

Des moyens de réglage peuvent permettre de mettre en oeuvre des lois de commande. Le moyen de réglage du volume de fluide du vérin de correction d'assiette peut être une valve. Le moyen de réglage de la pressurisation des vérins de suspension peut être un compresseur.

Les moyens de réglages peuvent être pilotés par une unité de commande. L'unité de commande peut être une unité centrale, de type calculateur numérique.

Dans un mode de réalisation, la suspension selon l'invention peut comprendre un amortisseur fonctionnellement disposé entre les corps des vérins et le bâti du moteur hydraulique, ou plus généralement les plongeurs de vérins. L'amortisseur est de préférence de type hydraulique.

De préférence, l'amortisseur est disposé du côté opposé au sens de marche de la roue. On entend par sens de marche de la roue, le sens de marche avant. On entend par sens de marche avant la direction principale de déplacement du véhicule.

Selon un troisième aspect, l'invention concerne un véhicule monté sur roues à motorisation hydraulique, dans lequel les roues à motorisation hydraulique sont reliées à un châssis de véhicule par une suspension selon le deuxième aspect.

### Description des figures

D'autres particularités et avantages de l'invention apparaîtront à la lecture de la description détaillée de mises en oeuvre et de modes de réalisation nullement limitatifs, au regard de figures annexées sur lesquelles :
- la FIGURE 1 est une vue en coupe de la région d'une roue directrice d'un mode de réalisation du véhicule selon l'invention ;
- la FIGURE 2 est une vue en perspective d'un premier mode de réalisation de la suspension à vérin dans l'exemple du véhicule de la figure 1 ;
- la FIGURE 3 est une vue en coupe de la partie supérieure de la suspension à vérin de la figure 2 ;
- la FIGURE 4 est une vue en perspective d'un deuxième mode de réalisation de la suspension à vérin ;
- la FIGURE 5 est une vue en perspective d'un troisième mode de réalisation de la suspension à vérin ;
- la FIGURE 6 est une vue en perspective d'une fonderie d'adaptation dans l'exemple de la suspension à vérin de la figure 5 ; et
- la FIGURE 7 est une vue en perspective de la fonderie d'adaptation de la figure 6 équipée d'un moteur hydraulique dans l'exemple de la suspension à vérin de la figure 5.

### Description de l'invention

Ces modes de réalisation n'étant nullement limitatifs, on pourra notamment réaliser des variantes de l'invention ne comprenant qu'une sélection de caractéristiques décrites par la suite, telles que décrites ou généralisées, isolées des autres caractéristiques décrites, si cette sélection de caractéristiques est suffisante pour conférer un avantage technique ou pour différencier l'invention par rapport à l'état de la technique.

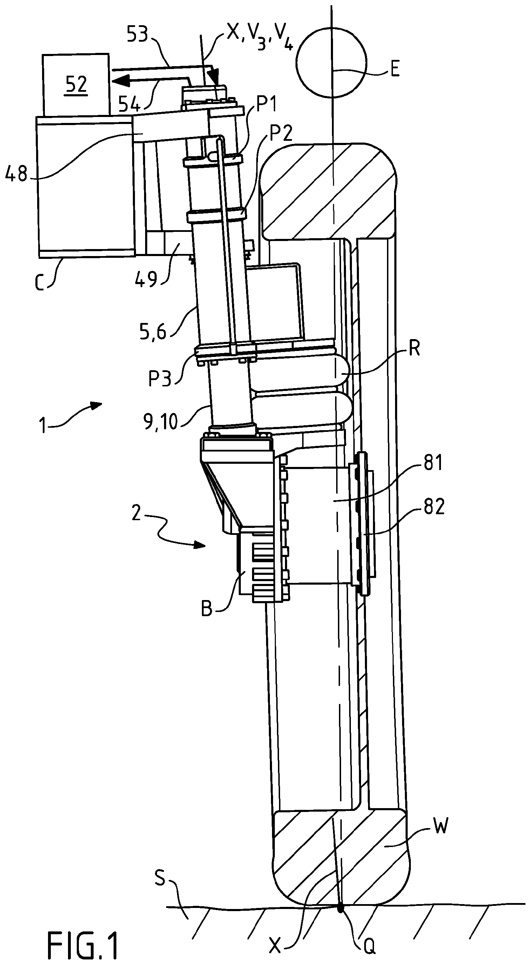

Il est maintenant décrit en référence aux FIGURES 1 à 3 un premier mode de réalisation d'une suspension à vérin **1** selon l'invention équipant un véhicule dont on n'aperçoit en FIGURE 1 que la roue **W,** sa motorisation, sa suspension et une partie du châssis **C.** La suspension à vérin **1** est agencée pour relier de façon souple la roue **W** à motorisation hydraulique **2** au châssis **C** du véhicule. Le moteur **2** comprend un bâti **B** formant support de roue, un stator **81** fixé au bâti **B** et un rotor **82** destiné à être fixé à la roue. Le bâti **B** et le stator **81** forment ce que l'on appelle un « stator de roue ».

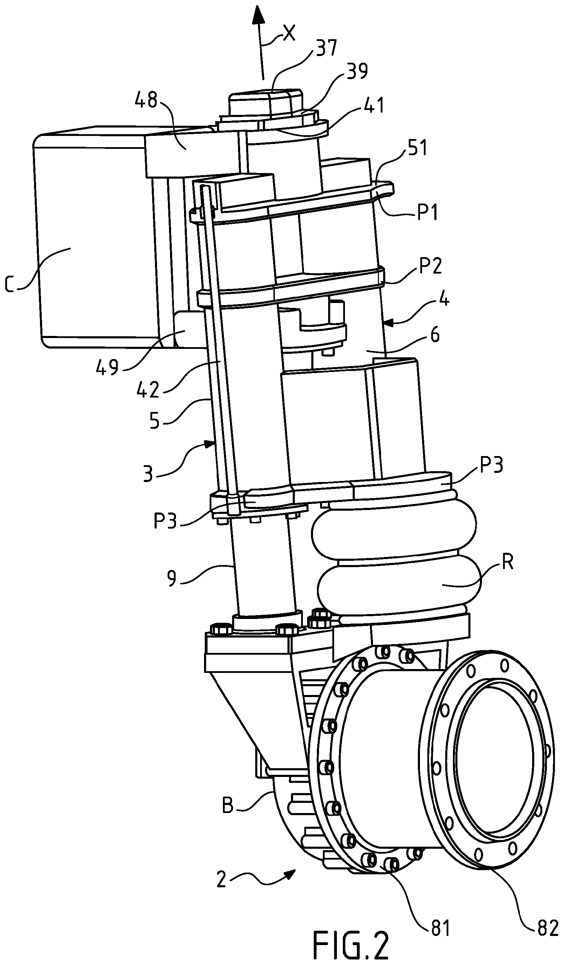

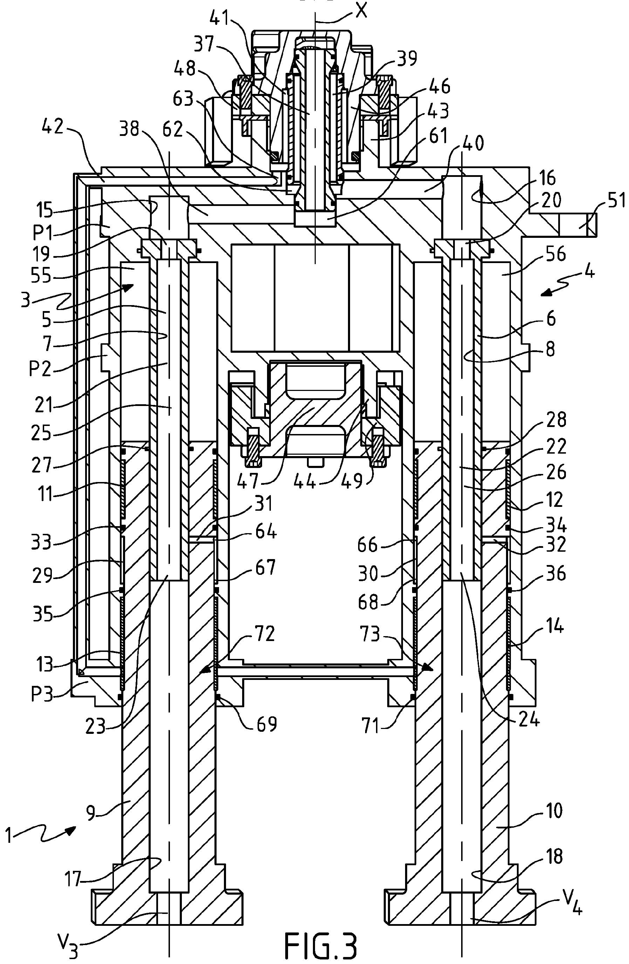

La suspension à vérin **1** comprend deux vérins télescopiques **3, 4,** (FIGURES 2 et 3).

Chacun des vérins **3, 4** comprend un corps **5, 6** dans lequel est alésé un cylindre borgne **7, 8.** Un plongeur respectif **9, 10** est monté en coulissement dans chaque cylindre **7, 8.** Pour assurer un guidage du plongeur **9, 10** dans le cylindre **7, 8,** des bagues de guidage **11, 12** garnissent la périphérie de l'extrémité libre des plongeurs **9, 10** et des bagues de guidage **13, 14** garnissent la surface des cylindres **7, 8** au voisinage de leur embouchure. Dans chaque cylindre **7, 8,** une chambre de travail **55, 56** est délimitée entre le plongeur **9, 10** et le fond du cylindre.

Les corps **5, 6** des vérins télescopiques **3, 4** sont reliés entre eux de manière rigide et parallèle au moyen de trois plateaux de liaison **P1, P2, P3.**

Les plongeurs de vérin **9, 10** sont fixés rigidement au bâti **B** du moteur hydraulique **2.**

Un ressort pneumatique **R** est installé fonctionnellement entre le plateau **P3,** ou plus généralement les corps **5, 6** des vérins, et le bâti **B** du moteur hydraulique **2.**

Dans l'exemple représenté, la roue **W** est une roue directrice du véhicule. A cet effet, la suspension **1** est reliée au châssis **C** de façon pivotante autour d'un axe de pivot de direction **X** formant un angle proche de 90° avec l'horizontale. Dans l'exemple représenté, l'axe de pivot de direction **X** coupe le plan équatorial **E** de la roue **W** en un point **Q** situé sur le sol **S.**

Pour le pivotement de la suspension autour de l'axe de pivot de direction **X,** les plateaux **P1** et **P2** sont chacun solidaires d'une bague de palier lisse **43, 44,** d'axe **X,** recevant chacune un tourillon **46, 47** solidaire d'une console **48, 49** fixée au châssis **C** et en faisant partie. Le plateau **P1** comporte un moyen d'attelage **51** distant de l'axe de pivot de direction **X** pour le raccordement du plateau **P1** à une tringlerie de commande de direction.

Comme le montre la FIGURE 1, les axes **V3, V4** des deux vérins **3, 4** rencontrent le plan équatorial **E** de la roue **W** au niveau du sol **S.** Ainsi les efforts essentiellement verticaux qui sont transmis entre le châssis **C** et le sol **S** par l'intermédiaire de la suspension **1** n'exercent pas de moment sur le guidage cylindre-plongeur des vérins. Ledit guidage, assuré par les bagues **11, 12, 13, 14,** ne doit résister qu'aux efforts essentiellement horizontaux et aux moments correspondants.

Dans l'exemple représenté, l'axe de pivot de direction **X** est coplanaire avec les axes **V3, V4** des deux vérins **3, 4,** et le plan commun de ces trois axes coupe le plan équatorial **E** de la roue **W** le long d'une ligne située dans le plan équatorial **E** et dans le plan du sol **S.** La trace de cette ligne dans le plan de la FIGURE 1 est le point **Q.**

Le moteur hydraulique **2** a besoin d'un trajet d'alimentation en huile sous pression **53** à partir d'une pompe **52** montée sur le châssis **C** (comme représenté très schématiquement à la FIGURE 1), et d'un trajet de retour d'huile **54** du moteur **2** à la pompe **52.**

Conformément à l'invention, les trajets **53** et **54** passent longitudinalement à travers les vérins **3** et **4.**

Plus particulièrement, chaque trajet comprend un canal axial respectif **25, 26** de l'un des vérins **3, 4,** respectivement.

Dans l'exemple représenté, chaque canal **25, 26** est formé par un alésage axial **17, 18** dans le plongeur **9, 10,** et par le conduit d'une canule rectiligne rigide **21, 22** qui est fixée au corps **5, 6** au fond du cylindre **7, 8,** et s'étend axialement dans le cylindre **7, 8.** Une extrémité proximale **19, 20** de la canule est emmanchée de façon fixe et étanche dans un évidement **15, 16** formé dans la surface intérieure du fond du corps **5, 6** du vérin.

L'autre extrémité, ou extrémité libre **23, 24** de la canule est engagée de façon coulissante dans l'alésage **17, 18** du plongeur. A cet effet, le diamètre extérieur de la canule correspond, à un jeu de fonctionnement près, au diamètre intérieur de l'alésage **17, 18.** Le jeu peut être relativement grand, par exemple de quelques dixièmes de millimètre, pour éviter toute surabondance de guidage entre le plongeur et le corps du vérin. La canule **21, 22** est suffisamment longue pour rester engagée dans l'alésage **17, 18** même lorsque le vérin est en état d'extension maximale.

La canule **21, 22** coulisse de façon étanche dans l'alésage du plongeur **9, 10** lors des débattements de la suspension **1,** en ce sens que l'interstice ou jeu annulaire entre la surface extérieure de la canule et l'alésage du plongeur est fermé par un joint d'étanchéité dynamique **27, 28.** Dans l'exemple représenté, le joint **27, 28** est disposé dans l'alésage **17, 18** du plongeur à son extrémité adjacente à la chambre de travail **55, 56** du vérin pour être en contact étanche avec le pourtour de la canule **21, 22.** Le joint **27, 28** assure une séparation étanche entre le fluide hydraulique faisant fonctionner le moteur **2** d'une part, et tout médium se trouvant dans la chambre de travail **55, 56** des vérins d'autre part. De préférence, comme représenté, le joint **27, 28** est très proche de la chambre de travail **55, 56,** du vérin de sorte que la majeure partie de la longueur de l'interstice entre la canule **21, 22** et l'alésage **17, 18** communique avec l'alésage **17, 18** et plus généralement avec le canal **25, 26.**

De manière non représentée, à leur extrémité opposée à la chambre de travail **55, 56,** les alésages **17, 18** sont raccordés à des orifices correspondants, d'alimentation et respectivement de retour, formés dans le bâti **B** du moteur hydraulique **2,** et qui débouchent à travers la surface du bâti **B** contre laquelle sont fixés les plongeurs **9, 10** des vérins.

Avantageusement, ladite surface est une surface plane commune pour les deux plongeurs **9, 10.**

Du côté opposé aux plongeurs **9, 10,** les canaux **25, 26** peuvent être raccordés rigidement et fixement aux trajets **53, 54** d'alimentation et de retour, respectivement, du châssis **C** dans le cas d'une roue non directrice.

Par contre, dans le cas illustré d'une roue directrice, le raccordement de chaque canal **25, 26** avec les trajets **53, 54** correspondant est réalisé par un système de joints tournants installé dans le pivot de direction supérieur.

Dans l'exemple représenté, deux chambres **37, 39** sont aménagées dans le tourillon **46** solidaire du châssis **C,** et coaxiales avec l'axe de pivot de direction **X.** Elles communiquent de façon étanche chacune avec l'une des deux chambres **61, 62** formées dans le plateau **P1.** Ces communications sont assurées quelle que soit la position angulaire du plateau **P1** par rapport au châssis **C** autour de l'axe de pivot de direction **X.** Les chambres concentriques **37, 39** sont en communication fixe avec les orifices d'aspiration et de refoulement, respectivement de la pompe **52.** Les chambres **61, 62** sont en communication fixe l'une avec l'évidement **15,** l'autre avec l'évidement **16,** via des conduits essentiellement radiaux respectifs **38, 40** formés dans la masse du plateau **P1.**

La chambre **37** est une chambre axiale tandis que la chambre **39** est une chambre annulaire entourant la chambre **37.**

Dans l'exemple représenté, il est prévu dans le tourillon **46** une troisième chambre annulaire **41** qui entoure la chambre annulaire **39** et qui communique avec une troisième chambre **63** formée dans le plateau **P1** de façon à se trouver dans le trajet que devrait emprunter le fluide hydraulique pour fuir à travers le palier lisse **43, 44** en provenance des chambres **61** et **62.** Ainsi, la chambre **63** constitue une chambre de récupération de fuite. La chambre annulaire **41** est raccordée par exemple à un réservoir de fluide hydraulique dans lequel la pompe puise automatiquement en tant que besoin.

Chaque vérin **3, 4** comprend une chambre de compensation **29, 30** agencée pour compenser les variations de volume de fluide hydraulique dans le canal **25, 26** lorsque la longueur du canal **25, 26** varie en conséquence des débattements de la suspension **1.**

Plus précisément, la chambre de compensation **29, 30** est annulaire et définie entre une paroi cylindrique intérieure formée sur le pourtour du plongeur **9, 10** et une paroi cylindrique extérieure formée à l'intérieur du cylindre **7, 8** de vérin. En outre, la chambre de compensation **29, 30** est définie entre un épaulement **64, 66** qui élargit la tête du plongeur **9, 10** d'une part et un épaulement **67, 68** qui forme un col à l'embouchure du cylindre **7, 8** d'autre part.

La chambre de compensation **29, 30** est située axialement entre la bague de guidage **11, 13** fixée sur la tête de plongeur **9, 10** et la bague de guidage **12, 14** fixée sur le col de l'embouchure du cylindre **7, 8.**

A une première extrémité axiale, la chambre de compensation **29, 30** est fermée de façon étanche à chacune de ses extrémités axiales par un joint annulaire **33, 34** assurant l'étanchéité vis-à-vis de la chambre de travail **55, 56** et respectivement un joint annulaire **35, 36** assurant l'étanchéité vis-à-vis de l'extérieur.

Dans l'exemple, le joint **33, 34** est porté par la tête de plongeur entre la chambre de compensation et la bague de guidage **11, 12** et s'appuie de façon étanche contre la paroi du cylindre **7, 8.** Toujours dans l'exemple, le joint **35, 36** est porté par le col de l'embouchure du cylindre entre la chambre de compensation et la bague de guidage **13, 14** et s'appuie de façon étanche sur la paroi périphérique du plongeur **9, 10.**

La chambre de compensation a un volume qui augmente lorsque le vérin se contracte, et qui diminue lorsque le vérin est en expansion. La variation de longueur axiale de la chambre de compensation est égale en valeur et opposée en signe à la variation de longueur du canal **25, 26.**

Comme les canules ont une longueur fixe, c'est la longueur des alésages **17** et **18** non occupée par les canules qui varie lorsque la longueur des vérins varie. L'aire de section droite de la chambre de compensation **29, 30** est égale à l'aire de section droite de l'alésage **17, 18.** Ainsi les égales variations de longueur axiale du canal **25, 26** et de la chambre de compensation **29, 30** se traduisent par d'égales variations de leurs volumes, ces variations étant, comme celles des longueurs, opposées en signe.

Pour permettre aux variations de volume de la chambre de compensation **29, 30** de compenser les variations de volume du canal **25, 26,** la chambre de compensation **25, 26** communique avec l'alésage **17, 18** par un passage radial **31, 32** à travers le plongeur **9, 10.**

Une extrémité du passage **31, 32** débouche dans la chambre de compensation **29, 30** au voisinage de son extrémité la plus proche de la chambre de travail du vérin, c'est-à-dire là où la chambre de compensation est toujours présente même quand le vérin est en état d'extension maximale.

L'autre extrémité du passage radial **31, 32** communique avec l'alésage **17, 18.** Dans l'exemple perfectionné représenté, cette communication est assurée via un rétrécissement qui assure un amortissement de la suspension par freinage de l'écoulement entre le canal **25, 26** et la chambre de compensation **29, 30.** Dans l'exemple, le rétrécissement est constitué par l'interstice ou jeu annulaire entre la canule et la paroi de l'alésage **17, 18** du côté du joint **27, 28** où le jeu communique avec le canal **25, 26.**

De manière non représentée, pour permettre le montage et en particulier l'insertion du plongeur **9, 10** dans le cylindre **7, 8,** le plateau **P3** et les deux bases de corps de vérin où sont formés les épaulements **67, 68** et le col des embouchures du cylindre peuvent être une pièce rapportée sur l'ensemble formé par les deux plateaux **P1** et **P2** et la partie supérieure des corps des vérins.

Le dispositif selon l'invention avec chambre de compensation évite que les débattements de la suspension se traduisent par des variations gênantes dans le débit d'alimentation du moteur hydraulique **2** en raison de variations du volume d'huile se trouvant dans les trajets d'alimentation et de retour. Cela permet aussi au volume d'huile de rester sensiblement constant dans le circuit sans nécessiter des allers et venues d'huile entre le circuit et un réservoir à chaque mouvement de suspension.

Des joints **33, 34** et **35, 36** sont également disposés entre une paroi cylindrique du pourtour extérieur du plongeur **9, 10** et une paroi cylindrique du pourtour intérieur du cylindre **7, 8** de vérin de part et d'autre de la chambre de compensation **29, 30** de façon à assurer l'étanchéité de cette dernière vis-à-vis de l'extérieur et vis-à-vis de la chambre de travail **55, 56.**

L'interstice annulaire entre le plongeur **9, 10** et le cylindre **7, 8** comporte au voisinage de l'embouchure du cylindre, sur tout son pourtour, une région d'extrémité **72, 73** définie entre deux joints **35, 36** et **69, 71** portés par le cylindre.

Dans l'exemple, les deux joints sont situés de part et d'autre de la bague de guidage **13, 14** portée par le cylindre.

Dans le mode de réalisation comportant une chambre de compensation **29, 30** telle que décrite plus haut, l'un des joints peut séparer de façon étanche ladite région d'extrémité **72, 73** et la chambre de compensation **29, 30.** Ce joint peut alors être, comme représenté, l'un **35, 36** des joints qui ferme la chambre de compensation.

Les deux régions d'extrémité **72** et **73** sont raccordée par un conduit de récupération **42** à une chambre de récupération de fuite, en particulier la chambre **41** décrite plus haut, solidaire du châssis et raccordée par exemple à un réservoir de fluide hydraulique.

Ainsi les vérins **3, 4** sont utilisés en paire pour pouvoir raccorder les deux branches haute pression et respectivement retour du moteur hydraulique **2.**

L'alimentation du moteur hydraulique **2** est réalisée de manière rigide à travers la suspension à vérin **1,** à l'exception éventuelle d'un joint tournant dans le cas d'une roue directrice.

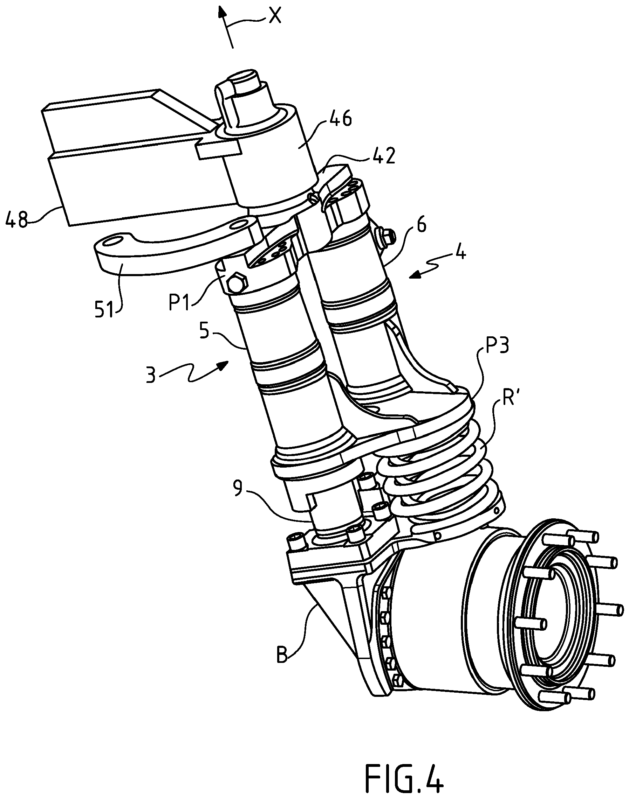

Il est maintenant décrit en référence à la FIGURE 4 un deuxième mode de réalisation d'une suspension à vérin **1** selon l'invention. Seules les différences entre le premier mode de réalisation et le deuxième mode deux réalisations sont décrites.

Les corps **5, 6** des vérins télescopiques **3, 4** sont reliés entre eux de manière rigide et parallèle au moyen de deux plateaux de liaison **P1, P3.**

Un ressort de compression **R'** est installé fonctionnellement entre le plateau **P3,** ou plus généralement les corps **5, 6** des vérins, et le bâti **B** du moteur hydraulique **2.**

Pour le pivotement de la suspension autour de l'axe de pivot de direction **X,** le plateau **P1** est solidaire d'une bague de palier lisse **42,** d'axe **X,** recevant un tourillon **46,** solidaire d'une console **48,** fixée au châssis **C** et en faisant partie. Le plateau **P1** comporte un moyen d'attelage **51** distant de l'axe de pivot de direction **X** pour le raccordement du plateau **P1** à une tringlerie de commande de direction.

Dans ce mode de réalisation, les éléments ayant pour fonction de guider en rotation la suspension sont disposés au dessus du plateau **P1.** Cette disposition autorise un pivotement complet autour de l'axe **X** de toute la partie de la suspension située sous le plateau **P1.**

Aussi, la rotation de la suspension autour de l'axe **X** n'est limitée que par la disposition de la biellette **51.** Il est ainsi possible d'obtenir une suspension pouvant être pivotée autour de l'axe **X** entre -90° et +90.

Cette caractéristique permet à un véhicule présentant une suspension selon ce mode de réalisation de mieux tourner dans un espace restreint.

Dans le cas de moteurs à deux sens de marche, le canal d'alimentation peut devenir canal de retour pour la marche arrière, et le canal de retour devient alors canal d'alimentation.

L'alimentation du moteur dans le premier sens de marche permet de diriger le véhicule selon une direction formant un angle compris entre ± 90° vers l'avant. L'alimentation du moteur dans le deuxième sens de marche permet de diriger le véhicule selon une direction formant un angle compris entre ± 90° vers l'arrière. La roue peut être ainsi entraînée dans toutes les directions.

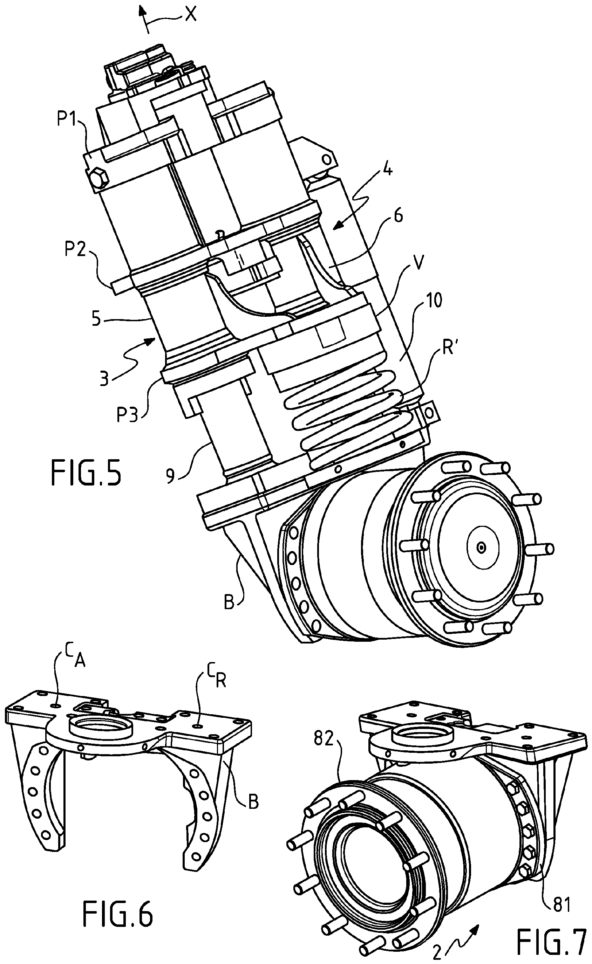

Il est maintenant décrit en référence aux FIGURES 5 à 7 un troisième mode de réalisation d'une suspension à vérin **1** selon l'invention. Seules les différences entre le premier mode de réalisation et le troisième mode deux réalisations sont décrites.

Les éléments de référence identiques à ceux décrits en référence à la FIGURE 1 sont repris sur la FIGURE 5. La description des éléments identiques à ceux décrits en référence à la FIGURE 1 n'est pas reprise.

Les plongeurs de vérin **9** et **10** des vérins télescopiques **3, 4** sont reliés entre eux de manière rigide et parallèle au moyen d'un plateau de liaison **P4.**

Un ressort de compression **R'** est installé fonctionnellement en série avec un vérin de correction d'assiette **V** entre le plateau **P3,** ou plus généralement les corps **5, 6** des vérins, et le bâti **B** du moteur hydraulique **2** ou le plateau **P4.**

Dans le mode de réalisation représenté, une extrémité du ressort **R'** est reliée au bâti **B** tandis que l'autre extrémité du ressort **R'** est reliée à une tige du vérin de correction d'assiette **V,** le corps du vérin de correction d'assiette étant relié au plateau **P3.**

Dans un mode de réalisation non représenté, une extrémité du ressort **R'** est reliée au plateau **P3** tandis que l'autre extrémité du ressort **R'** est reliée à une tige du vérin de correction d'assiette **V,** le corps du vérin de correction d'assiette étant relié au bâti **B.**

Le vérin de correction d'assiette **V** de correction d'assiette permet de corriger l'assiette du véhicule sans changer le débattement de suspension. Le vérin de correction d'assiette **V** permet de conserver une cabine du véhicule à l'horizontale même si le véhicule roule perpendiculairement à une pente.

Le vérin de correction d'assiette **V** de correction d'assiette permet aussi de modifier la raideur de la suspension.

Avantageusement, une loi de commande dédiée à contrôler l'assiette du véhicule ou la raideur des suspensions définit le volume de fluide du vérin de correction d'assiette et la pressurisation des vérins de suspensions.

Cette loi de commande peut être mise en oeuvre par une unité de commande, telle qu'une unité de calcul numérique, disposée dans le véhicule. L'unité de commande peut être reliée à des moyens de réglage du volume de fluide du vérin de correction d'assiette et de la pressurisation des vérins de suspensions

Sur route, on peut par exemple prévoir un mode de fonctionnement du véhicule dans lequel les suspensions du véhicule présentent des suspensions de plus fortes raideurs à l'avant qu'à l'arrière. Cette distribution des raideurs est utile en cas de freinage d'urgence.

A cet effet, il est possible de prévoir une suspension avant pour laquelle le vérin de correction d'assiette présente un réservoir d'huile vide tandis que les vérins de suspension **3, 4** sont mis sous pression. Dans ce cas, la raideur de la suspension avant est élevée.

Il est aussi possible de prévoir une suspension arrière pour laquelle le vérin de correction d'assiette présente un réservoir d'huile rempli tandis que les vérins de suspension **3, 4** ne sont pas mis sous pression. Dans ce cas, la raideur de la suspension est faible.

Sur chemin, on peut prévoir un autre mode de fonctionnement du véhicule, dans lequel les suspensions du véhicule sont réglées pour maintenir l'assiette du véhicule.

La suspension à vérin **1** selon ce troisième mode de réalisation comprend en outre un amortisseur **A** fonctionnellement disposé entre les corps de vérin **5** et **6** et le plateau **P4,** ou plus généralement les plongeurs de vérins **9** et **10.** L'amortisseur **A** est parallèle aux vérins **3** et **4.**

L'amortisseur **A** est disposé latéralement par rapport au vérin, du côté arrière par rapport au sens de la marche du véhicule. Ainsi, l'amortisseur est protégé des chocs qui pourraient résulter de l'environnement du véhicule.

La pièce de fonderie **B** est avantageusement prévue pour être fixée au plateau **P4.**

Le plateau **P4** comprend deux trous traversants, non représentés, l'un dit d'alimentation et l'autre de retour.

Un conduit **Ca,** dit d'alimentation, est formé dans la pièce de fonderie **B.** Le conduit d'alimentation **Ca** est avantageusement conçu pour déboucher au niveau d'un orifice d'alimentation, alimentant le moteur hydraulique **2** en fluide pressurisé.

Un conduit **Cr,** dit de retour, est formé dans la pièce de fonderie **B.** Le conduit de retour **Cr** est avantageusement conçu pour déboucher au niveau d'un orifice de retour, recevant un fluide non pressurisé du moteur hydraulique **2.**

Les conduits **Ca** et **Cr** sont prévus pour faire communiquer le trajet d'alimentation **53** avec l'alimentation en fluide pressurisé du moteur hydraulique **2** et le trajet de retour **54** avec le retour de fluide non pressurisé du moteur hydraulique **2.**

Bien entendu, les améliorations proposées dans le deuxième mode de réalisation pourraient être combinées avec l'une ou plusieurs des améliorations proposées dans le troisième mode de réalisation.

Il est ainsi résolu le problème de la rupture ou de l'éclatement d'un flexible de moteur hydraulique.

L'invention a également pour avantage de ne pas avoir à prévoir de place libre pour les tuyaux d'alimentation du moteur hydraulique dans chaque portion de la roue par rapport au châssis du véhicule.

### Nomenclature

- 1: suspension selon l'invention
- 2: moteur
- 3, 4: vérin
- 5, 6: corps de vérin
- 7, 8: cylindre de vérin
- 9, 10: plongeur de vérin
- 11, 12: bague de guidage
- 13, 14: bague de guidage
- 15, 16: évidement du corps de vérin
- 17, 18: alésage du plongeur de vérin
- 19, 20: extrémité proximale de canule
- 21, 22: canule
- 23, 24: extrémité libre de canule
- 25, 26: canal
- 27, 28: joint d'étanchéité dynamique de canal
- 29, 30: chambre de compensation
- 31, 32: passage entre la chambre de compensation et le canal
- 33, 34: joint de chambre de compensation
- 35, 36: joint de chambre de compensation
- 37: chambre centrale
- 38: conduit de raccordement
- 39: chambre annulaire
- 40: conduit de raccordement
- 41: chambre annulaire de récupération de fuites
- 42: conduit de récupération
- 43: palier lisse
- 44: palier lisse
- 46: tourillon
- 47: tourillon
- 48: console
- 49: console
- 51: moyen d'attelage
- 52: pompe
- 53: trajet d'alimentation
- 54: trajet de retour
- 55, 56: chambre de travail
- 61, 62, 63: chambre
- 64, 66: épaulement
- 67, 68: épaulement
- 69, 71: joint
- 72, 73: région d'extrémité
- 81: stator
- 82: rotor
- A: amortisseur
- B: bâti de moteur hydraulique
- C: châssis
- Ca, Cr: conduits d'alimentation et de retour
- E: plan équatorial de la roue
- P1, P2, P3, P4: plateau
- Q: point d'intersection
- R,R': ressort pneumatique, ressort mécanique
- S: sol
- V: vérin de correction d'assiette
- V3, V4: axe du vérin
- W: roue
- X: axe de pivot de direction

## Revendications

1. Procédé pour alimenter en fluide hydraulique un moteur hydraulique (2) de roue motrice supportant un véhicule par l'intermédiaire d'une suspension (1) à vérin télescopique (3) équipé d'un premier et d'un second vérin parallèles entre eux, **caractérisé en ce qu'**on fait passer le fluide hydraulique par un canal d'alimentation (25) s'étendant longitudinalement à travers le premier vérin de la suspension à vérin (3) et **en ce qu'**on fait passer le fluide hydraulique ayant traversé le moteur hydraulique (2), par un canal de retour (26) s'étendant longitudinalement à travers le deuxième vérin télescopique (4) de la suspension à vérin (1).

2. Suspension à vérin (1) agencée pour relier de façon souple une roue à motorisation hydraulique (2) avec un châssis (V) de véhicule, comprenant au moins un premier et un second vérin de suspension (3,4) parallèles entre eux et ayant un corps (5) et un plongeur (9), constituant deux éléments télescopiques aptes à être reliés l'un au châssis et l'autre à un stator de roue qui peut être un support de roue et/ou un bâti de moteur hydraulique (B), et des moyens de canalisation pour relier une pompe hydraulique (52) montée sur le châssis (C) et un moteur hydraulique (2) associé à la roue (W), **caractérisé en ce que** les moyens de canalisation comprennent au moins un canal (25, 26) s'étendant longitudinalement à travers le vérin (3, 4), l'au moins un canal comprenant un canal d'alimentation (25) du moteur hydraulique (2) en fluide hydraulique sous pression et un canal de retour (26) pour le fluide hydraulique refoulé par le moteur hydraulique (2) et retournant à la pompe (52), le premier et le second vérin comportant chacun un canal précité (25, 26), d'alimentation et de retour respectivement.

3. Suspension selon la revendication 2, **caractérisée en ce que** le canal (25, 26) communique avec une chambre de compensation (29, 30) des variations de longueur du canal, consécutives aux variations de longueur du vérin (3, 4).

4. Suspension selon la revendication 3, **caractérisé en ce que** la chambre de compensation (29, 30) a une section égale à celle du canal (25, 26) dans une région dont la longueur varie avec la longueur du vérin, et **en ce que** la chambre de compensation a une longueur axiale qui subit des variations égales en valeur et opposées en signe à celles de la région du canal.

5. Suspension selon la revendication 3 ou 4, **caractérisée en ce que** la chambre de compensation (29, 30) est définie entre deux parois d'extrémité (64, 66 ; 67, 68) de cette chambre, qui appartiennent l'une à un cylindre (7, 8) du vérin et l'autre à un plongeur (9, 10) du vérin, et qui s'éloignent l'une de l'autre lorsque le vérin se raccourcit.

6. Suspension selon l'une quelconque des revendications 2 à 5, **caractérisée en ce que** le canal (25, 26) est en partie défini dans un alésage (17, 18) d'un plongeur (9, 10) de vérin et en partie dans une canule (21, 22) axiale qui est fixée au corps (5, 6) du vérin dans un cylindre (7, 8) du vérin, **en ce que** la canule coulisse dans l'alésage (17, 18) du plongeur lors des débattements de la suspension (1), et **en ce qu'**une étanchéité (27, 28) est prévue autour de la canule (21, 22) dans l'alésage (17, 18) du plongeur.

7. Suspension selon l'une quelconque des revendications 2 à 6, **caractérisée en ce que** du côté du châssis (V), le canal est raccordé à deux chambres (37, 39) concentriques avec un pivot de direction l'une pour l'alimentation en fluide hydraulique sous pression, l'autre pour le retour de fluide hydraulique, l'une centrale et l'autre annulaire autour de la chambre centrale.

8. Suspension selon la revendication 7, **caractérisée en ce qu'**il y a en outre dans le pivot de direction une chambre de récupération de fuite (41) placée pour intercepter les fuites de fluide hydraulique dans le pivot de direction et/ou de raccordée à un canal (42) de récupération de fuites de fluide hydraulique en provenance de l'embouchure du cylindre (7, 8).

9. Suspension selon l'une quelconque des revendications 2 à 8, **caractérisée en ce que** les éléments télescopiques sont adaptés à être reliés l'un (9, 10) rigidement au stator de roue, l'autre (5, 6) au châssis (C) du véhicule avec tout au plus un degré de liberté qui est une rotation autour d'un axe de pivot de direction (X), et **en ce que** le vérin assure un guidage linéaire du stator de roue par rapport au châssis lors des mouvements de débattement de la suspension.

10. Suspension selon la revendication 9, **caractérisée en ce que** l'axe longitudinal (V3, V4) du vérin rencontre un plan équatorial (E) de la roue (W) sensiblement au niveau du sol (S).

11. Suspension selon l'une quelconque des revendications 2 à 10, comprenant en outre un ensemble comportant un ressort (R, R') et un vérin de correction d'assiette montés en série, ledit ensemble étant fonctionnellement disposé entre le corps de vérin (5, 6) et le bâti (B) du moteur hydraulique (2).

12. Suspension selon l'une quelconque des revendications 2 à 11, comprenant en outre un amortisseur (A) fonctionnellement disposé entre les corps des vérins (5, 6) et le bâti (B) du moteur hydraulique (2), ou plus généralement les plongeurs de vérins (9, 10).

13. Suspension selon la revendication 12, dans laquelle l'amortisseur (A) est disposé du côté opposé au sens de marche avant de la roue.

14. Véhicule monté sur roues à motorisation hydraulique, **caractérisé en ce que** les roues (W) à motorisation hydraulique (2) sont équipées d'une suspension (1) selon l'une des revendications 2 à 13.

## Patentansprüche

1. Verfahren zur Versorgung eines Hydraulikmotors (2) für ein Antriebsrad, das ein Fahrzeug über eine Aufhängung (1) mit einem teleskopartigen Stellantrieb (3) trägt, der mit einem ersten und einem zweiten Stellantrieb ausgestattet ist, die parallel zueinander angeordnet sind, mit Hydraulikflüssigkeit, **dadurch gekennzeichnet, dass** die Hydraulikflüssigkeit durch einen Versorgungskanal (25) geleitet wird, der sich in Längsrichtung durch den ersten Stellantrieb der Aufhängung mit Stellantrieb (3) erstreckt, und dass die Hydraulikflüssigkeit, die den Hydraulikmotor (2) passiert hat, durch einen Rückführkanal (26) geleitet wird, der sich in Längsrichtung durch den zweiten teleskopartigen Stellantrieb (4) der Aufhängung mit Stellantrieb (1) erstreckt.

2. Aufhängung mit Stellantrieb (1), die dafür ausgelegt ist, ein hydraulisch angetriebenes Rad (2) flexibel mit einem Fahrgestell (V) eines Fahrzeugs zu verbinden, umfassend mindestens einen ersten und einen zweiten Aufhängungsstellantrieb (3, 4), die parallel zueinander angeordnet sind und einen Körper (5) und einen Kolben (9) aufweisen, die zwei teleskopische Elemente bilden, von denen eines mit dem Rahmen und das andere mit einem Radstator verbunden werden kann, der eine Radstütze und/oder ein Hydraulikmotorrahmen (B) sein kann, und Leitungsmittel zum Anschließen einer auf dem Fahrgestell (C) montierten Hydraulikpumpe (52) und eines dem Rad (W) zugeordneten Hydraulikmotors (2), **dadurch gekennzeichnet, dass** die Leitungsmittel mindestens einen Kanal (25, 26) umfassen, der sich in Längsrichtung durch den Stellantrieb (3, 4) erstreckt, wobei der mindestens eine Kanal einen Versorgungskanal (25) des Hydraulikmotors (2) mit druckbeaufschlagter Hydraulikflüssigkeit und einen Rückführkanal (26) für die vom Hydraulikmotor (2) abgegebene und zur Pumpe (52) zurückkehrende Hydraulikflüssigkeit umfasst, wobei der erste und zweite Stellantrieb jeweils einen Kanal (25, 26) für die Versorgung und für die Rückführung aufweisen.

3. Aufhängung gemäß Anspruch 2, **dadurch gekennzeichnet, dass** der Kanal (25, 26) mit einer Ausgleichskammer (29, 30) für Änderungen der Kanallänge in Verbindung steht, die sich aus Änderungen der Länge der Stellantriebe (3, 4) ergeben.

4. Aufhängung gemäß Anspruch 3, **dadurch gekennzeichnet, dass** die Ausgleichskammer (29, 30) einen Querschnitt aufweist, der dem des Kanals (25, 26) in einem Bereich entspricht, dessen Länge sich in Abhängigkeit von der Länge der Stellantriebe ändert, und dass die Ausgleichskammer eine axiale Länge aufweist, die Änderungen unterliegt, die den gleichen Wert und das entgegengesetzte Vorzeichen zu denen des Kanalbereichs aufweisen.

5. Aufhängung gemäß Anspruch 3 oder 4, **dadurch gekennzeichnet, dass** die Ausgleichskammer (29, 30) zwischen zwei Stirnwänden (64, 66; 67, 68) dieser Kammer begrenzt ist, von denen die eine zu einem Zylinder (7, 8) des Stellantriebs und die anderen zu einem Kolben (9, 10) des Stellantriebs gehört, und die sich beim Verkürzen des Stellantriebs voneinander wegbewegen.

6. Aufhängung gemäß einem der Ansprüche 2 bis 5, **dadurch gekennzeichnet, dass** der Kanal (25, 26) teilweise in einer Bohrung (17, 18) eines Kolbens (9, 10) des Stellantriebs und teilweise in einer axialen Kanüle (21, 22) begrenzt ist, die am Körper (5, 6) des Stellantriebs in einem Zylinder (7, 8) des Stellantriebs befestigt ist, dass die Kanüle während der Verschiebungen der Aufhängung (1) in der Bohrung (17, 18) des Kolbens gleitet, und dass eine Dichtung (27, 28) um die Kanüle (21, 22) in der Bohrung (17, 18) des Kolbens vorgesehen ist.

7. Aufhängung gemäß einem der Ansprüche 2 bis 6, **dadurch gekennzeichnet, dass** der Kanal auf der Seite des Fahrgestells (V) mit zwei Kammern (37, 39) verbunden ist, die mit einem Lenkstift konzentrisch sind, von denen eine der Versorgung mit druckbeaufschlagter Hydraulikflüssigkeit und die andere der Rückführung von Hydraulikflüssigkeit dient, wobei eine zentral ist und die andere ringförmig um die zentrale Kammer verläuft.

8. Aufhängung gemäß Anspruch 7, **dadurch gekennzeichnet, dass** sich ferner in dem Lenkstift eine Leckrückgewinnungskammer (41) befindet, die so positioniert ist, dass sie Leckagen von Hydraulikflüssigkeit in dem Lenkstift auffängt, und/oder die mit einem Leckrückgewinnungskanal (42) für Hydraulikflüssigkeit aus der Mündung des Zylinders (7, 8) verbunden ist.

9. Aufhängung gemäß einem der Ansprüche 2 bis 8, **dadurch gekennzeichnet, dass** von den teleskopischen Elementen das eine (9, 10) starr mit dem Radstator und das andere (5, 6) mit dem Fahrgestell (C) des Fahrzeugs mit höchstens einem Freiheitsgrad verbunden werden kann, der aus einer Drehung um eine Achse des Lenkstifts (X) besteht, und dass der Stellantrieb eine lineare Führung des Radstators in Bezug auf das Fahrgestell während der Verschiebebewegungen der Aufhängung sicherstellt.

10. Aufhängung gemäß Anspruch 9, **dadurch gekennzeichnet, dass** die Längsachse (V3, V4) des Stellantriebs auf eine äquatoriale Ebene (E) des Rades (W) trifft, die im Wesentlichen auf Bodenhöhe (S) liegt.

11. Aufhängung gemäß einem der Ansprüche 2 bis 10, ferner umfassend eine Anordnung mit einer Feder (R, R') und einem in Reihe geschalteten Stellantrieb zur Lagerregelung, wobei die Anordnung funktionell zwischen dem Körper des Stellantriebs (5, 6) und dem Rahmen (B) des Hydraulikmotors (2) angeordnet ist.

12. Aufhängung gemäß einem der Ansprüche 2 bis 11, ferner umfassend einen Dämpfer (A), der funktionell zwischen den Körpern der Stellantriebe (5, 6) und dem Rahmen (B) des Hydraulikmotors (2) oder allgemein den Kolben der Stellantriebe (9, 10) angeordnet ist.

13. Aufhängung gemäß Anspruch 12, bei der der Dämpfer (A) auf der Seite entgegen der vorderen Fahrtrichtung des Rades angeordnet ist.

14. Fahrzeug, das auf hydraulisch angetriebenen Rädern montiert ist, **dadurch gekennzeichnet, dass** die hydraulisch angetriebenen (2) Räder (W) mit einer Aufhängung (1) gemäß einem der Ansprüche 2 bis 13 ausgestattet sind.

## Claims

1. Method of supplying hydraulic fluid to a hydraulic motor (2) of a drive wheel supporting a vehicle by means of a telescopic jack (3)-type suspension system (1) equipped with a first jack and a second jack that are mutually parallel, **characterized in that** the hydraulic fluid is made to pass through a feed duct (25) extending longitudinally through the first jack of the jack (3)-type suspension system and **in that** the hydraulic fluid having passed through the hydraulic motor (2) is made to pass by a return channel (26) extending longitudinally through the second telescopic jack (4) of the jack-type suspension system (1).

2. Jack-type suspension system (1) designed to connect in flexible manner a hydraulic motorization wheel (2) to a vehicle chassis (V), comprising at least one first and one second suspension jack (3, 4) that are mutually parallel and having a body (5) and a plunger (9), constituting two telescopic elements able to be connected one to the chassis and the other to a wheel stator which can be a wheel support and/or a hydraulic motor frame (B), and channeling means for connecting a hydraulic pump (52) mounted on the chassis (C) and a hydraulic motor (2) associated with the wheel (W), **characterized in that** the channeling means comprise at least one channel (25, 26) extending longitudinally through the jack (3, 4), the at least one channel comprising a feed duct (25) for supplying the hydraulic motor (2) with hydraulic fluid under pressure and one return channel (26) for the hydraulic fluid driven back by the hydraulic motor (2) and returning to the pump (52), the first and the second jack each comprising an aforementioned channel (25, 26), for supply and for return, respectively.

3. Suspension system according to Claim 2, **characterized in that** the channel (25, 26) communicates with a chamber (29, 30) for compensation of length variations of the channel, resulting from variations in length of the jack (3, 4).

4. Suspension system according to Claim 3, **characterized in that** the compensation chamber (29, 30) has a cross section equal to that of the channel (25, 26) in a region whose length varies with the length of the jack, and **in that** the compensation chamber has an axial length undergoing variations equal in value and opposite in sign to those of the region of the channel.

5. Suspension system according to Claim 3 or 4, **characterized in that** the compensation chamber (29, 30) is defined between two end walls (64, 66; 67, 68) of this chamber, one of them belonging to a cylinder (7, 8) of the jack and the other to a plunger (9, 10) of the jack, which move away from each other as the jack is shortened.

6. Suspension system according to any one of Claims 2 to 5, **characterized in that** the channel (25, 26) is partly defined in a bore (17, 18) of a jack plunger (9, 10) and partly in an axial cannula (21, 22) which is secured to the body (5, 6) of the jack in a cylinder (7, 8) of the jack, **in that** the cannula slides in the bore (17, 18) of the plunger during the displacements of the suspension system (1), and **in that** a seal (27, 28) is provided around the cannula (21, 22) in the bore (17, 18) of the plunger.

7. Suspension system according to any one of Claims 2 to 6, **characterized in that** on the side with the chassis (V), the channel is connected to two chambers (37, 39) which are concentric with a steering pin, one for the supplying of hydraulic fluid under pressure, the other for the return of hydraulic fluid, one being central, the other being annular about the central chamber.

8. Suspension system according to Claim 7, **characterized in that** there is also a leak recovery chamber (41) in the steering pin, designed to intercept hydraulic fluid leakage in the steering pin and/or connected to a channel (42) for recovery of hydraulic fluid leakages coming from the mouth of the cylinder (7, 8).

9. Suspension system according to any one of Claims 2 to 8, **characterized in that** the telescopic elements are adapted to be connected, the one (9, 10) rigidly to the wheel stator, and the other (5, 6) to the chassis (C) of the vehicle with at most one degree of freedom, which is a rotation about a steering pin axis (X), and **in that** the jack ensures a linear guidance of the wheel stator with respect to the chassis during displacement movements of the suspension system.

10. Suspension system according to Claim 9, **characterized in that** the longitudinal axis (V3, V4) of the jack meets an equatorial plane (E) of the wheel (W) substantially in the area of the ground (S).

11. Suspension system according to any one of Claims 2 to 10, furthermore comprising an assembly containing a spring (R, R') and an attitude adjustment jack, mounted in series, said assembly being functionally disposed between the jack body (5, 6) and the frame (B) of the hydraulic motor (2).

12. Suspension system according to any one of Claims 2 to 11, furthermore comprising a shock absorber (A) functionally disposed between the jack bodies (5, 6) and the frame (B) of the hydraulic motor (2), or more generally the jack plungers (9, 10).

13. Suspension system according to Claim 12, wherein the shock absorber (A) is disposed on the side opposite to the direction of movement of the wheel.

14. Vehicle mounted on wheels with hydraulic motorization, **characterized in that** the hydraulic motorization (2) wheels (W) are equipped with a suspension system (1) according to any one of Claims 2 to 13.
